# EUROPEAN PATENT APPLICATION

(11) **EP 4 648 227 A1**
(43) Date of publication of application: **12.11.2025**
(21) Application number: 24766206.7
(22) Date of filing: 18.01.2024
(51) Int. Cl.: H01Q 3/00

(54) **TERMINAL ANTENNA ADJUSTMENT METHOD AND DEVICE, STORAGE MEDIUM, AND ELECTRONIC DEVICE**

(30) Priority: 08.03.2023 CN 202310248205
(71) Applicant: ZTE CORPORATION, Shenzhen, Guangdong 518057 (CN)
(72) Inventor: SHEN, Shaowu, Shenzhen, Guangdong 518057 (CN)
(74) Representative: Deambrogi, Edgardo
(86) International application number: PCT/CN2024/073116
(87) International publication number: WO 2024/183483

(57) **Abstract**

Embodiments of the present invention provide a terminal antenna adjustment method and apparatus, a storage medium, and an electronic apparatus. The method comprises: collecting signal quality state of a terminal antenna on each channel path; detecting an obstacle of the terminal antenna in a transmission direction; acquiring relative location information about the terminal antenna with respect to the router; adjusting radiation of the antenna terminal according to at least one of the signal quality state, the obstacle and the relative location information. Thus, the problems in the related art that a WIFI working channel and a frequency band are often relatively fixed, and cannot be dynamically switched and adjusted, and poor directivity cannot be compensated can be solved, the radiation direction of an WIFI antenna can be adaptively adjusted, and connection to the router is implemented with an optimal radiation antenna and path, thereby enhancing WIFI signal strength, and improving the WIFI use experience of users.

## Description

### Cross-Reference to Related Application

This direction diagram is based on Chinese Patent Application CN2023102482050 filed on 08 March 2023 and entitled "TERMINAL ANTENNA ADJUSTMENT METHOD, DEVICE, STORAGE MEDIUM, AND ELECTRONIC DEVICE", and claims priority to Chinese Patent Application, the direction diagram of which is incorporated herein by reference in its entirety.

### Technical Field

Embodiments of the present invention relate to the field of communications, and in particular, to a terminal antenna adjustment method and apparatus, a storage medium, and an electronic apparatus.

### Background

A coordinate energy distribution diagram, i.e. a direction diagram, of an electromagnetic wave radiation field of a WIFI antenna in an omnidirectional space, here, the direction diagram is further divided into a Total Radiated Power (TRP) direction diagram and a Total Isotropic Sensitivity (TIS) direction diagram. A field strength direction diagram represented by radiation field strength, a power direction diagram represented by power density, the WIFI direction diagram being able to represent the antenna gain distribution of WIFI in various directions. The radiation direction of the WIFI determines a direction towards which the performance of the WIFI is best. The coverage is the maximum, and the stronger the signal is, the higher the protocol mode, such as 802.11b/g/a/n/ac/ax, allocated by the router to the terminal is, the higher the allocated MCS rate is, and the higher the throughput of the final WIFI transmission is. In the related art, a WIFI working channel and a frequency band are usually relatively fixed, and cannot be dynamically switched and adjusted, and at the same time, the defect problem of poor directivity cannot be compensated.

Aiming at the problems in the related art that a WIFI working channel and a frequency band are generally relatively fixed, and cannot be dynamically switched and adjusted, and at the same time, poor directivity cannot be compensated, no solution has been proposed.

### Summary

Embodiments of the present invention provide a terminal antenna adjustment method and device, a storage medium, and an electronic device, so as to at least solve the problem in the related art that a WIFI working channel and a frequency band are generally relatively fixed, and cannot be dynamically switched and adjusted, and at the same time, poor directivity cannot be compensated.

According to one embodiment of the present invention, a terminal antenna adjustment method is provided. The method includes:
a signal quality state of a terminal antenna on each channel path is collected;
an obstacle of the terminal antenna in a transmission direction is detected;
relative location information about the terminal antenna with respect to the router is acquired;
radiation of the antenna terminal is adjusted according to at least one of the signal quality state, the obstacle and the relative location information.

According to another embodiment of the present invention, a terminal antenna adjustment device is also provided. The device includes:
a collection module, configured to collect a signal quality state of a terminal antenna on each channel path;
a detection module configured to detect an obstacle of the terminal antenna in a transmission direction;
an acquisition module, configured to acquire relative location information about the terminal antenna with respect to a router;
an adjustment module, configured to adjust radiation of the antenna terminal according to at least one of the signal quality state, the obstacle and the relative location information.

According to another embodiment of the present invention, a computer-readable storage medium is further provided. The storage medium storing a computer program, wherein the computer program is configured to perform, when executed by a processor, the steps in any one of the method embodiments when running.

According to another embodiment of the present invention, also provided is an electronic device, including a memory and a processor, wherein the memory stores a computer program, and the processor is configured to execute the computer program to perform the steps in any one of the method embodiments.

### Brief Description of the Drawings

Fig. 1 is a hardware structure block diagram of a computer device of a terminal antenna adjustment method according to an embodiment of the present invention;
Fig. 2 is a flowchart of a terminal antenna adjustment method according to an embodiment of the present invention;
Fig. 3 is a system structure diagram of a WIFI dynamic directional adaptation 5G terminal device according to an embodiment of the present invention;
Fig. 4 is a schematic diagram of a WIFI antenna state collection according to an embodiment of the present invention;
Fig. 5 is a schematic diagram of a WIFI antenna direction diagram test and orientation mapping according to an embodiment of the present invention;
Fig. 6 is a schematic diagram of directional scanning and selection of a WIFI antenna according to an embodiment of the present invention;
Fig. 7 is a schematic diagram of long-distance obstacle scanning of a WIFI antenna according to an embodiment of the present invention;
Fig. 8 is a schematic diagram of a coupling change of a WIFI antenna direction diagram according to an embodiment of the invention;
Fig. 9 is a schematic diagram of dynamic tracking of a WIFI terminal direction diagram according to an embodiment of the present invention;
Fig. 10 is a schematic diagram of a two-dimensional diagram of a WIFI antenna direction diagram according to an embodiment of the present invention;
Fig. 11 is a schematic diagram of establishing a direction diagram library of a WIFI antenna according to an embodiment of the present invention;
Fig. 12 is a block diagram of a terminal antenna adjustment device according to an embodiment of the present invention.

### Detailed Description of the Embodiments

Embodiments of the present invention will be described below in detail with reference to the accompanying drawings and in conjunction with embodiments.

It should be noted that the terms "first" and "second" in the description, claims, and drawings of the present invention are used to distinguish similar objects, but are not necessarily used to describe a specific sequence or order.

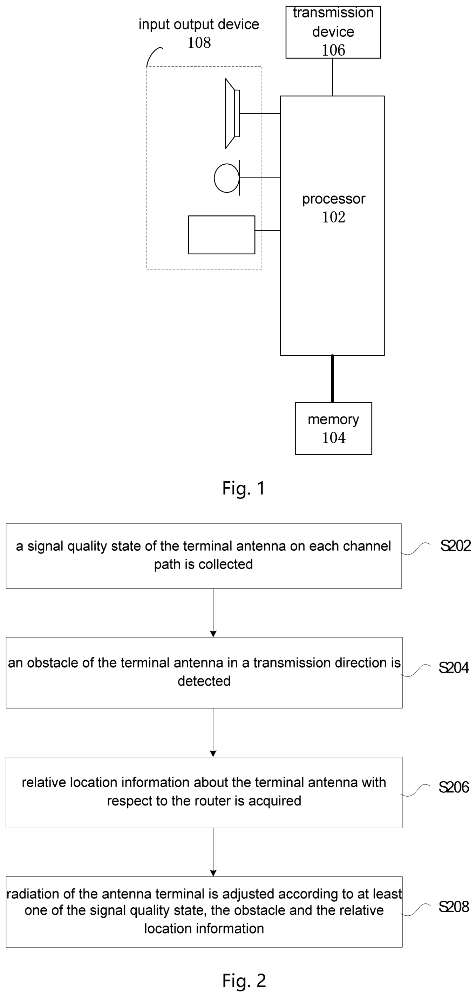

The method embodiments provided in the embodiments of the present invention can be executed in a computer device or a similar arithmetic apparatus. Taking the operation on a computer device as an example, Fig. 1 is a hardware structure block diagram of a computer device of a terminal antenna adjustment method according to an embodiment of the present invention. As shown in Fig. 1, the computer device may include one or more (only one is shown in Fig. 1) processors 102 (the processors 102 may include, but are not limited to, a processing apparatus such as a microprocessor (MCU) or a programmable logic device) and a memory 104 configured to store data, the computer device can further include a transmission device 106 and an input/output device 108 for a communication function. A person of ordinary skill in the art may understand that the structure shown in Fig. 1 is only schematic, which does not limit the structure of the computer device. For example, the computer device may also include more or fewer components than shown in Figure 1, or have a different configuration than that shown in Figure 1.

The memory 104 may be configured to store a computer program, for example, a software program and a module of application software, such as a computer program corresponding to the terminal antenna adjustment method in the embodiments of the present invention. The processor 102 runs the computer program stored in the memory 104, so as to execute various function applications and terminal antenna adjustment, that is, implement the foregoing method. Memory 104 may include high-speed random access memory, and may also include non-volatile memory, such as one or more magnetic storage devices, flash memory, or other non-volatile solid-state memory. In some examples, memory 104 can further include memory remotely located with respect to processor 102, which can be connected to computer devices over a network. Examples of such networks include, but are not limited to, the Internet, intranets, local area networks, mobile communication networks, and combinations thereof.

The transmission device 106 is used to receive or transmit data via a network. Specific examples of the described network may include a wireless network provided by a communication provider of a computer device. In one example, the transmission device 106 may include a Network Interface Controller (NIC) that may be coupled to other network devices via a base station to communicate with the Internet. In one example, the transmission device 106 may be a Radio Frequency (RF) module for communicating wirelessly with the Internet.

The embodiment provides a terminal antenna adjustment method running on the computer device. Fig. 2 is a flowchart of a terminal antenna adjustment method according to an embodiment of the present invention. As shown in Fig. 2, the flow includes the following steps:
Step S202, a signal quality state of the terminal antenna on each channel path is collected;
Step S204, an obstacle of the terminal antenna in a transmission direction is detected;
Step S206, relative location information about the terminal antenna with respect to the router is acquired;
Step S208, radiation of the antenna terminal is adjusted according to at least one of the signal quality state, the obstacle and the relative location information.

By means of the steps S202 to S208, the problems in the related art that a WIFI working channel and a frequency band are always relatively fixed, and cannot be dynamically switched and adjusted, and at the same time, poor directivity cannot be compensated can be solved; and a WIFI antenna can self-adaptively adjust a radiation direction and is connected to a connected router via an optimal radiation antenna and path, thereby enhancing the strength of a WIFI signal and improving the WIFI use experience of a user.

In an embodiment of the present invention, the above Step S208 may specifically include:
S2081, a working antenna of a terminal antenna is determined according to at least one of a signal quality state, an obstacle and the relative location information, wherein the working antenna is a single antenna or an antenna combination;

Further, S2081 may specifically include: an omnidirectional direction diagram of the terminal antenna is obtained from a pre-established direction diagram library, a current direction diagram of the terminal antenna is determined from the omnidirectional direction diagram based on a signal quality state and/or relative location information, and a working antenna of the terminal antenna is determined according to the current direction diagram; or based on at least one of the signal quality state, the obstacle and the relative location information, by switching antennas of the terminal antenna in various transmission channels, an antenna of a transmission channel with the maximum signal strength is determined as the working antenna.

S2082,the terminal antenna is adjusted via the working antenna, so that a signal quality state of the terminal antenna satisfies a pre-set condition.

Further, S2082 may specifically include:
a terminal antenna is controlled to be switched to a working antenna;
when the signal quality state of the terminal antenna satisfies the described pre-set condition after switching to the working antenna, the adjustment of the terminal antenna ends;
when the signal quality state of the terminal antenna does not satisfy the pre-set condition after switching to the working antenna, radiation direction adjustment is performed on the direction diagram of the working antenna according to a parasitic effect and/or a coupling effect of the direction diagram of the working antenna;
when the signal quality state of the terminal antenna satisfies the foregoing preset condition after the radiation direction adjustment is performed on the direction diagram of the working antenna, the adjustment of the terminal antenna ends; and
when the signal quality state of the terminal antenna does not satisfy the pre-set condition after the radiation direction adjustment is performed on the direction diagram of the working antenna, a radiation mode of the working antenna is switched, and the adjustment of the terminal antenna ends, wherein the radiation mode includes an omnidirectional radiation mode and a directional radiation mode.

In an embodiment, radiation direction adjustment is performed on the direction diagram of the working antenna according to the parasitic effect of the direction diagram of the working antenna may specifically include at least one of the following: a tuning switch or a variable slot length control unit are added on each antenna to change the direction diagram corresponding to the working antenna; adjusting a direction diagram on a ground feed by using the variable device whose direction diagram is changed; the radiation direction of the direction diagram is adjusted through the on/off of the resistance and capacitance tuning part on the path of the feed point of the main signal and the change of the resistance and capacitance value.

In an embodiment, the radiation direction adjustment is performed on the direction diagram of the working antenna according to the coupling effect of the direction diagram of the working antenna may specifically include: a new direction diagram of the working antenna is formed by changing at least one of power, signal strength, and orientation of the direction diagram of the working antenna.

In another embodiment, the radiation mode of the working antenna is switched may specifically include: in a case where the location of a router connected to a terminal is unknown or an initial connection is established, the radiation mode is controlled to be an omnidirectional radiation mode; and/or when the terminal has identified the location of the router to be currently connected and the signal strength of the router is less than a third preset threshold value, the radiation mode is controlled to be switched to the directional radiation mode.

In an optional embodiment, the method further includes: according to connection data of a terminal antenna and a pre-set router, an optimal direction diagram of the terminal antenna and a radiation mode of the direction diagram are selected; and/or the direction diagram of the terminal antenna is adjusted by respectively performing at least one of a direction test, a direction selection and a direction adjustment multiple times, so as to form a omnidirectional direction diagram of the terminal antenna; and the omnidirectional direction diagram is stored into an direction diagram library.

In the embodiment of the present invention, the above Step S202 may specifically include: signal quality state of a terminal antenna on each channel path is collected in real time through a baseband chip and an antenna chip connected to the baseband chip, wherein the signal quality state include at least one of the following: uplink and downlink throughput rates, a received signal strength indication (RSSI) value, a bit error rate, and a signal to noise ratio (SNR).

In the embodiment of the present invention, the Step S206 may specifically include: the location information of the terminal is collected at a preset time period, a distance difference value between location information collected within a current time period and location information collected within a previous time period is determined, in a case where the distance difference value is greater than a pre-set distance, it is determined that the location of the terminal antenna changes relative to the router, generating and acquiring location change information, wherein the relative location information includes location change information; or a current location of a terminal and an initial location when the terminal is connected to the router are acquired, and a distance and direction between the current location and the initial location is determined; based on an omnidirectional direction diagram of the terminal antenna, a relative location and a relative direction of the terminal antenna and the router are determined and acquired according to the distance and direction, and at this moment, the relative location information includes the relative location and the relative direction.

In an embodiment of the present invention, the Step S204 may include:
S2041, an obstacle in a transmission direction of a terminal antenna is detected in a manner of obstacle proximity detection;

Further, the Step S201 may specifically include: it is detected whether an interference or blockage signal source exists on the terminal antenna within a preset distance range; if the interference or blockage signal source exists, it is determined that an obstacle exists on the terminal antenna in the transmission direction; if the interference or blockage signal source does not exist, it is determined that no obstacle exists on the terminal antenna in the transmission direction; a charge signal is transmitted to a router, wherein the charge signal is radiated via a corresponding terminal antenna, and returns after encountering an obstacle; if a charge signal returned by a router is detected, it is determined that an obstacle exists in a transmission direction of a terminal antenna; and if the charge signal returned by the router is not detected, it is determined that no obstacle exists in the transmission direction in the terminal antenna.

Step S2042,detect an obstacle in a transmission direction of the terminal antenna in a manner of obstacle remotely detection.

Further, the Step S2042 may specifically include: it is determined a time difference between a signal transmitted to the router and a signal returned by the router, and it is determined that an obstacle exists in a transmission direction of the terminal antenna according to a difference between the time difference and a predetermined theoretical time difference in a state without obstacles, where the difference is greater than or equal to a first preset threshold; in a case where the difference value is less than the first pre-set threshold value, it is determined that no obstacle exists in a transmission direction in the terminal antenna; an attenuation difference between a signal strength of a signal sent by a router and a predetermined theoretical signal strength under an obstacle-free state is determined; in a case where the attenuation difference is greater than or equal to a second pre-set threshold value, it is determined that the terminal antenna has an obstacle in a transmission direction; and in a case where the attenuation difference is less than the second pre-set threshold value, it is determined that no obstacle exists in the transmission direction in the terminal antenna.

The direction diagram in this embodiment refers to a coordinate energy distribution diagram of an electromagnetic wave radiation field of a terminal antenna in an omnidirectional space, and the direction diagram of each direction of the terminal antenna is referred to as an omnidirectional direction diagram.

The terminal antenna may specifically be a WIFI antenna, and may also be another antenna. The embodiments of the present invention are described in detail below by taking the WIFI antenna as an example.

This embodiment mainly solves a WIFI directional problem of a terminal, according to a bearing location of a terminal relative to a router and a surrounding state, changing a direction and a direction diagram of a WIFI antenna on the terminal in real time. The method specifically includes: by monitoring a WIFI throughput and an error code state of a terminal, determining whether a current WIFI quality problem is caused by directivity; establishing a WIFI direction diagram model of a terminal, and invoking configuration in real time, testing a relative location and direction of a WIFI device and a router of a terminal, and adjusting a direction of an expectorating antenna; a hand-held and near-far obstacle of a user is detected, and directional anti-interference detection technology is used to solve WIFI near-field and far-field interference and obstacles, and detect and avoid an influence. reconstruction is performed in a manner of a Multi-Input Multi-Output, (MIMO) WIFI antenna direction diagram on a terminal, so that a WIFI maximum gain radiation direction of the terminal faces a router; changing a radiation mode of a WIFI antenna in a manner of a coupling algorithm of an antenna direction diagram. Direction diagram adjustment for different directional locations is implemented by using a direction diagram parasitic adjustment algorithm. The problem of a small scanning angle of a current direction diagram is solved by means of a direction diagram orientation adjustment algorithm. Two WIFI front-end modules are switched to N directions to reduce a dead zone, so as to improve the WIFI real-time dynamic throughput performance of a terminal. The relative locations and directions of the terminal and the router are tracked in real time, adaptively adjusted, and the alignment of the directions is dynamically adjusted in real time.

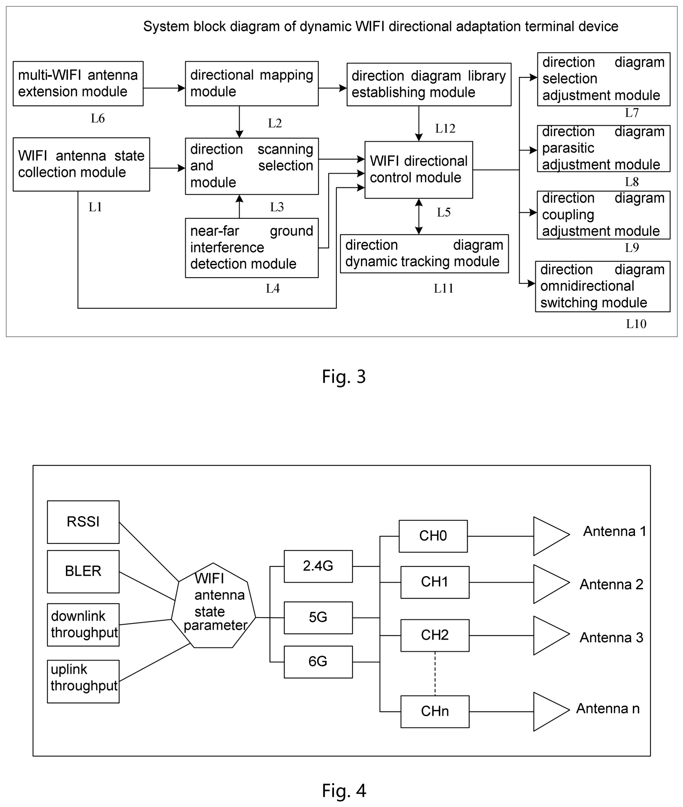

Fig. 3 is a system structure diagram of a WIFI dynamic directional adaptation 5G terminal device according to an embodiment of the present invention, as shown in figure 3, the mobile terminal includes a WIFI antenna state collection module L1 and a directional mapping module L2, a direction scanning and selection module L3, a near-far ground interference detection module L4, a WIFI directional control module L5 and a multi-WIFI antenna extension module L6, a direction diagram selection adjustment module L7, a direction diagram parasitic adjustment module L8 and a direction diagram coupling adjustment module L9, a direction diagram omnidirectional switching module L10, a direction diagram dynamic tracking module L11, and a direction diagram library establishing module L12.

Fig. 4 is a schematic diagram of a WIFI antenna state collection according to an embodiment of the present invention. As shown in Fig. 4, a WIFI antenna state collection module L1 is connected to a WIFI directional scanning and selection module L3 and is configured to collect the states of various MIMO antennas and signal quality state of a terminal WIFI 2.4G/5G/6G. including signal strength under a path of each channel of WIFI, such as an RSSI value, or performance parameters of each channel, such as a throughput rate, a bit error rate and an SNR signal-to-noise ratio. collected values of an antenna state and a signal quality state are collected in real time via a mobile phone baseband chip and a WIFI chip connected thereto, and various reported values are captured. The antenna states include the above parameter values for antenna states for multiple MIMO paths, CHO/CH1/CH1 n.

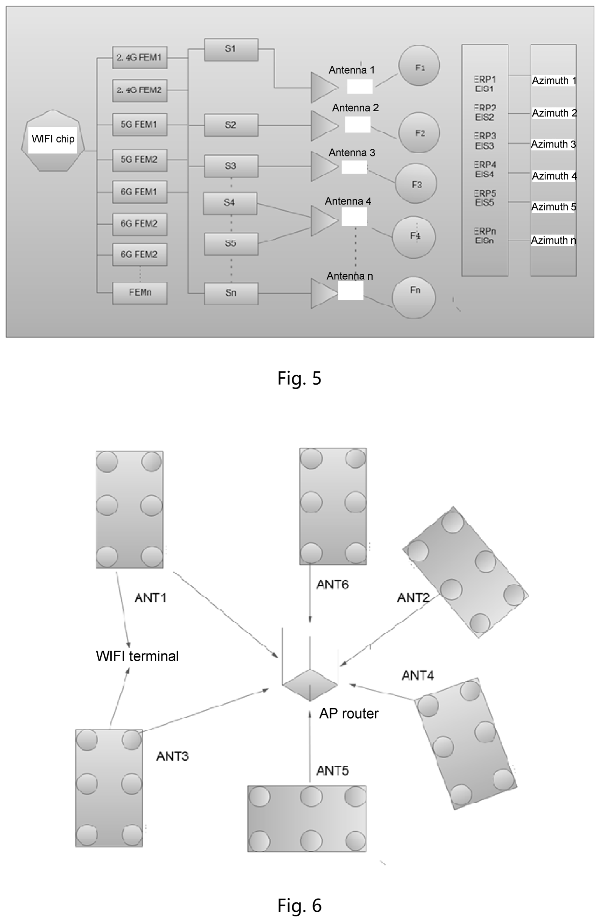

Fig. 5 is a schematic diagram of a WIFI antenna direction diagram test and orientation mapping according to an embodiment of the present invention. As shown in Fig. 5, a directional mapping module L2 is connected to a directional scanning and selection module L3 and is configured to perform a directional test on a terminal WIFI antenna, and a path sequence of the WIFI antenna forms a mapping table, facilitating invoking.

A direction diagram of each antenna of a WIFI on a terminal to be tested is tested, and the direction diagram is stored same in a WIFI direction diagram library, the steps for testing and selecting a mapping are as follows:
A direction diagram of a WIFI antenna is tested in an OTA darkroom before leaving a factory, and a control module controls a terminal to switch between a certain WIFI antenna and antenna paths, so as to form S1, S2,... Sn multiple signals and antenna paths, in which each path tests a complete omnidirectional 360-degree direction diagram F1, F2,... Fn.

In each direction diagram, a certain threshold requirement is exceeded, for example, eRP and EIS values satisfy a certain strength value and direction selection processing.

The ERPs, the EISs, the orientation values and the WIFI antenna path sequences form a mapping table to facilitate invoking.

A WIFI direction scanning and selection module L3 connected to the WIFI directional control module L5 and configured to test and select the strongest directional of the WIFI antenna of the terminal and the connected router, the location of a WIFI router connected to a terminal WIFI is relatively fixed. However, along with the movement of a user location, the manner in which the user holds the terminal changes, and the location of the terminal WIFI is frequently moved, i.e. the directionality of different use points is different; and even in the same location, different direction diagrams are also different. Even at the same location, the same orientation, different proximate and distal contacts and obstacles, are variable in orientation.

However, due to limitations of the WIFI antenna itself, both the AP and the station terminal antenna have certain directionality. The characteristics of the WIFI directivity are as follows: a direction diagram of a WIFI antenna is omnidirectional, rather than a regular spherical direction diagram, i.e. some directional signals are strong and some directional signals are weak. If the antenna direction diagrams of the WIFI antenna of the terminal and the router deviate from each other, the WIFI signal is weak, and if the antenna direction diagrams of the WIFI antenna of the terminal and the router are aligned and form a certain orthogonal relationship, the WIFI signal is strongest.

The purpose of the WIFI direction scanning and selection module L3 is to measure the directionality of a terminal and a router. Fig. 6 is a schematic diagram of directional scanning and selection of a WIFI antenna according to an embodiment of the present invention. As shown in Fig. 6, two measurement methods are used herein:
A scanning test method, a WIFI antenna is controlled by software to work at different locations, so as to realize omnidirectional scanning of a direction diagram at each direction and each angle. Dividing different WIFI antennas into different areas and angles through distributed antennas on a terminal, sequentially switching antennas one by one; transmitting a WIFI signal to a target router; determining, by means of a returned received signal strength, which antenna direction diagram of the target router and a terminal WIFI is closest to same, so that an initial rough direction can be obtained; and then changing the bias of the direction diagram by means of an antenna combination adjustment strategy, so as to measure an optimal location of a specific direction diagram.

A relative locationing test method: when a WIFI terminal starts to connect to a router, the terminal is close to an Access Point, (AP), a mobile phone terminal records location information A, such as longitude and latitude, about an AP; and when the mobile phone moves to a location B, the terminal records longitude and latitude information about the location B, a locationing test module measures the distance and direction between two points AB, and if the direction does not match the maximum radiation direction of a WIFI terminal, the switching control module switches the current direction of the direction diagram, so that the strongest signal direction is always maintained.

A near-far ground interference detection module L4, which is connected to a WIFI directional control module L6 and a direction scanning and selection module L3 and is configured to detect an obstacle in a WIFI maximum transmission direction, there are two modes of proximity detection and remote detection. If an obstacle is detected in a certain direction, it is necessary to change the radiation direction by switching.

A obstacle proximity detection method of a direction diagram, includes: it is detected whether there is an interference and blockage signal source within a certain distance range (such as 0.3 m, 0.5 m, and 1 m) around a WIFI antenna of a terminal, such as a user's hand grip, a metal article, a user's body barrier. A obstacle proximity detection method of a direction diagram, by means of a reduced SAR (Successive Approximation Register) signal detection in a plurality of directions on a terminal, when it is detected that a user holds a hand or another object approaches, an SAR signal is triggered to change, and a module can determine that the direction has an obstacle.

Here, by connecting the ground or feed point of each WIFI antenna on the terminal to each channel of the SAR chip, the SAR chip adopts a multi-channel design, such as one-hop 3 and one-hop 4, and if there are four WIFI antennas currently, the SAR chip is divided into four. If the current terminal has eight main/standby antennas, two to four SAR chips are used.

When the WIFI is working, a charge signal is transmitted through the SAR chip, the charge signal is radiated out through a corresponding WIFI metal or a Flexible Printed Circuit (FPC) antenna, and is returned back after encountering an obstacle, and is then received through the corresponding WIFI antenna, and is returned to the SAR chip for detection and statistics through a connection line on the board, realizing the obstacle detection in the direction of a corresponding WIFI antenna.

A obstacle remotely detection method of a direction diagram: in a WIFI communication process, a plurality of antennas are used for data transmission, and one antenna is used for obstacle detection in a specific direction. Here, two detection methods are used.

The first method is a time difference calculation method. A distance AB between a WIFI terminal and a connected router router AP is known. A time difference t1 between a transmitting signal and a signal returned by the router and a theoretical time difference t2 without an obstacle are calculated, and if there is an obstacle in the direction, t2 > t1, the thicker the obstacle is, the larger a difference value t1-t2 = Δt between the two is.

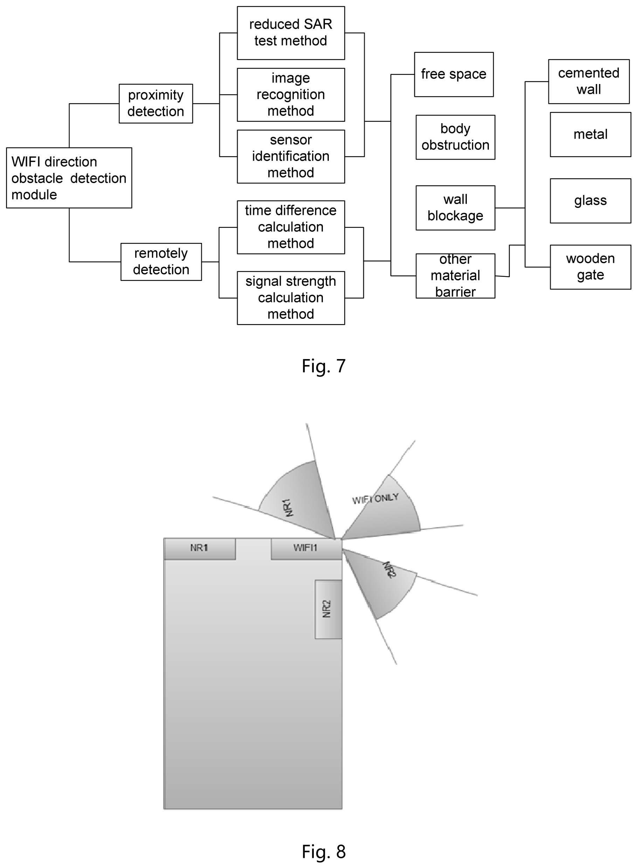

The second method is an attenuation difference calculation method. Fig. 7 is a schematic diagram of long-distance obstacle scanning of a WIFI antenna according to an embodiment of the present invention. As shown in Fig. 7, when a WIFI signal on a terminal is transmitted in a middle and a long distance, attenuation values of different materials are different, and the larger the frequency is, the larger the attenuation is. In addition, they are also divided into free space loss and physical material loss, in which the physical material loss is further divided into human body loss, wall loss, wood material loss, metal material loss, glass material loss, etc.

At the same time, the present module also contains terminal WIFI electromagnetic interference detection. During a working process, WIFI needs to be far away from same frequency, near frequency, and other electromagnetic wave signals having a harmonic and intermodulation relationship. These signals are derived from electronic devices such as Bluetooth, microwave ovens, computers, televisions, high voltage lines, mobile phones, Portable Android Device (PAD) and other WIFI and routers. Therefore, the avoiding mechanism for a WIFI direction diagram of a terminal in the present design also needs to avoid these interference obstacles, so as to prevent a WIFI signal from being interfered.

The L5 WIFI directional control module is connected to the direction diagram library establishing module L12, the near-far ground interference scanning module L4 and each directional adjustment control module L7-L11, and controls the WIFI antenna to work at different locations by software, so as to realize omnidirectional scanning of a direction diagram. a directional control module, which controls the operations of the following parts:
According to the uplink and downlink throughput and other signal quality parameters, controlling the working quantity of the WIFI antenna.

According to the uplink and downlink throughput and other signal quality parameters, selecting and controlling an optimal direction diagram direction of a single or multiple WIFI antennas.

A control mode based on antenna direction diagram reconstruction: according to uplink and downlink throughputs and other signal quality parameters, a primary order and a secondary order of a combination of ch0, ch1, ch3... chn in MIMO antennas is controlled. For example, a mobile phone has a plurality of WIFI antennas, and how to combine, which are first antennas and which are second antennas, can be switched between each other and can be changed. Namely, by way of channel switching between WIFI front-end modules, sequence switching between different WIFI primary and secondary antennas and MIMO antennas is realized, thereby reconstructing an antenna direction diagram.

A control mode reconstructed based on a direction diagram: according to a current application program, service requirement and throughput requirement. Reconstruction of a service-based direction diagram is implemented. WIFI throughput of a terminal is divided into uplink uploading throughput, downlink downloading throughput, and bidirectional mutual uploading throughput. The uplink and downlink restructuring of the direction diagram is performed based on the requirements of the current service.

Based on a WIFI directional fine-tuning mode: after a WIFI antenna, a WIFI path and a WIFI direction diagram are selected, if a current signal is still not the strongest, or there is an obstacle on a transmission path, a direction diagram fine-tuning mode can be selected, i.e. accurate fine-tuning of the WIFI antenna direction diagram is performed, the control sequence of adjusting the WIFI antenna direction diagram is shown in Table 1.

**Table 1**

| Control Port | Strongest Gain Direction (Phi, theta) | Frequency (Hz) | Channel | Adjustable Width | WIFI Antenna Number |
|---|---|---|---|---|---|
| 1 | 0,0 | 2.4G | 1 | 30° | 1 |
| 2 | 30,0 | 2.4G | 1 | 30° | 2 |
| 3 | 60,0 | 2.4G | 6 | 30° | 3 |
| 4 | 90,0 | 2.4G | 6 | 30° | 4 |
| 5 | 120,0 | 2.4G | 11 | 30° | 5 |
| 6 | 150,0 | 2.4G | 11 | 30° | 6 |
| 7 | 180,0 | 5G | 36 | 30° | 1 |
| 8 | 90,0 | 5G | 36 | 30° | 2 |
| 9 | 90,30 | 5G | 100 | 30° | 3 |
| 10 | 90,60 | 5G | 100 | 30° | 4 |
| 11 | 90,90 | 5G | 165 | 30° | 5 |
| 12 | 90,120 | 5G | 165 | 30° | 6 |
| 13 | 90,150 | 6G | 1 | 15° | 1 |
| 14 | 90,180 | 6G | 1 | 15° | 2 |
| 15 | 180,0 | 6G | 6 | 15° | 3 |
| 16 | 180,30 | 6G | 6 | 15° | 4 |
| 17 | 180,60 | 6G | 11 | 15° | 5 |
| 18 | 180,90 | 6G | 11 | 15° | 6 |
| 19 | 180,120 | 2.4G | 36 | 30° | 1 |
| 20 | 180,150 | 2.4G | 36 | 30° | 2 |
| 21 | 180,180 | 2.4G | 100 | 30° | 3 |
| 22 | 180,210 | 2.4G | 100 | 30° | 4 |
| 23 | 270,0 | 2.4G | 165 | 30° | 5 |
| 24 | 270,30 | 2.4G | 165 | 30° | 6 |
| 25 | 270,60 | 5G | 1 | 30° | 1 |
| 26 | 270,90 | 5G | 1 | 30° | 2 |
| 27 | 270,120 | 5G | 6 | 30° | 3 |
| 28 | 270,150 | 5G | 6 | 30° | 4 |
| 29 | 270,180 | 5G | 11 | 30° | 5 |
| 30 | 360,0 | 5G | 11 | 30° | 6 |
| 31 | 360,30 | 6G | 36 | 15° | 1 |
| 32 | 360,60 | 6G | 36 | 15° | 2 |
| 33 | 360,90 | 6G | 100 | 15° | 3 |
| 34 | 360,120 | 6G | 100 | 15° | 4 |
| 35 | 360,150 | 6G | 165 | 15° | 5 |
| 36 | 360,180 | 6G | 165 | 15° | 6 |

A multi-WIFI antenna extension module L6 connected to the directional mapping module L2 and configured to be an extension of a WIFI MIMO antenna. WIFI antenna expansion is divided into two maners.

The first one is expansion of the number of antennas, and two to N WIFI antennas are distributed on the terminal. In conjunction with a direction diagram orientation of each WIFI antenna, by means of antenna distribution layout in different directions, WIFI signals can be transmitted in all directions without dead angles.

N antennas are distributed at upper, lower, left and right sides of the mobile phone, and each antenna corresponds to the strongest orientation. Here, some antennas are independent channel antennas, and some antennas are multiplexed with other frequency bands, for example, a WIFI antenna is parasitized on an LTE/NR antenna.

The second one is expansion of an antenna location, for example, WIFI contains four antennas, and each antenna corresponds to a WIFI frequency band and channel. A traditional solution is relatively independent. Different WIFI antennas are interconnected by DPDT, 3P3T, 4P4T, and nPnT, so as to form different switching and interworking links, thereby expanding an antenna path.

The third is the extension of the front-end FEM, for example, the WIFI contains four MIMO channels, i.e. CHO, CH1, CH2 and CH3, and each of the original channels corresponds to a PA/LNA front-end module, of course, it can also include one of the PA/LNAs, or only a filter and a switch without a PA/LNA, the WIFI antenna is connected to the WIFI chip via these front-end FEM modules. The traditional solution is one-to-one, in which a multi-input multi-output switch is used, For example, the DPDT,3P3T,4P4T connects the inputs of these modules to the output port of the TX/RX of the WIFI chip to form an interconnection state, each FEM corresponds to one antenna, so as to implement interworking and switching between antennas in different directions.

A direction diagram selecting and adjusting module L7 connected to the WIFI directional control module L6 and configured to self-adaptively adjust a direction diagram of a WIFI antenna on the terminal, so that a WIFI signal and a router on the terminal can align with a maximum radiation direction. Namely, among a plurality of MIMO (multiple-input multiple-output) antennas of WIFI, an optimal single or antenna combination is selected for maximum direction diagram adaptation and switching. The direction diagram adjustment can adjust a direction diagram of a single antenna, and in a manner of antenna structure matching, resonance or parasitic changes, the pattern is changed into a current distribution indicating a single WIFI antenna, thereby realizing a change in a radiation direction of the direction diagram. The direction diagram adjustment may also be a change of a system direction diagram corresponding to the plurality of MIMO antennas.

The direction diagram parasitic adjustment module L8 is connected to the WIFI directional control module L6 and is configured to perform directional radiation adjustment based on a pattern parasitic effect.

A direction diagram adjustment method for each WIFI antenna, including: a tuning switch or a variable slot length control unit is added to each antenna to change a direction diagram of a corresponding WIFI antenna. That is, control and adjustment that the maximum gain direction diagram can be changed is realized in a three-dimensional space, and the strongest gain radiation direction of a single WIFI antenna is changed. Here, the mode is divided into two working modes. The first mode is a mode in which the direction diagram is changed while the central frequency is unchanged, and the second mode is a mode in which the direction diagram is changed while the central frequency is also changed, i.e. a mode for adjusting a direction diagram in which the electrical length of a slot antenna or an FPC antenna on a terminal is variable.

WIFI direction diagram changing method II: parasitic regulation method:
On a WIFI antenna path of a terminal, a direction diagram to change branches is added, and on a metal frame of the terminal, different intervals and paragraphs are divided same into by means of a gap. Each interval corresponds to an antenna direction, the lower left segment corresponds to the lower left direction, and the upper right segment corresponds to the upper right segment.

A variable device with a changed pattern, which may be an SP4T tuning switch or a MEMS tuning switch, and adjusts a pattern on a ground feed; and may also be a resistance and capacitance tuning device on a primary signal feed point path, which implements direction diagram radiation direction adjustment with a variable maximum gain direction in a manner of on-off and on-off of different architectures and variation of resistance and capacitance values.

Taking a metal-frame WIFI antenna as an example, when a terminal WIFI needs to change a pattern, only different antenna clearances need to be switched on and switched off. Different on and off states change the surface current density of the WIFI antenna, and at the same time change the direction of the surface current, thereby changing the radiation mode of the WIFI antenna.

An direction diagram coupling adjustment module L9, which is connected to a WIFI directional control module L6 and is configured to perform directional adjustment based on a direction diagram coupling effect.

Fig. 8 is a schematic diagram of a coupling change of a WIFI antenna direction diagram according to an embodiment of the present invention, as shown in Fig. 8, a third method for changing a WIFI direction diagram according to the present embodiment relates to a coupling adjustment method, specifically, a direction diagram adjustment method for a combination of multiple MIMO antennas, when a terminal has N 2.4G or 5G antennas working together, and at the same time, when the terminal has a plurality of MIMO WIFI antennas, each antenna generates a certain direction diagram covering a certain range, and the correlation changes due to the coupling between the WIFI MIMO antennas, the overall transmission pattern is varied, here by varying the power of the different antennas, in this way, a new general combined pattern may be formed. Namely, selecting M antennas from N antennas to work together, i.e. selecting the number of WIFI transceiving antennas, and controlling respective signal strengths and directions, and generating a specific system direction diagram in a manner of a pre-defined antenna selection algorithm.
WIFI MIMO antenna combination 1: RSSI1, BLER 1;
WIFI MIMO antenna combination 2: RSSI2, BLER 2;
WIFI MIMO antenna combination 3: RSSI3, BLER3;
WIFI MIMO antenna combination n: RSSIn, BLERn.

The direction diagram omnidirectional switching module L10 is connected with the WIFI directional control module L6 and is configured to adjust based on the omnidirectional or directional mode of the pattern, set to switch between a omnidirectional mode and a directional mode of a WIFI antenna on a terminal. The omnidirectional switching module of the present invention performs adaptive switching control by detecting a current connection scene and signal strength, specifically as follows:
when the location of the AP connected to the terminal is unknown or the terminal is initially connected, the terminal WIFI is in an omnidirectional radiation mode. In a default state, the WIFI of the terminal is in an omnidirectional radiation working mode state.

The omnidirectional radiation mode has the following scenarios:
when a WIFI of a terminal is initially connected to a router.

The terminal cannot identify the current router location.

When the terminal itself is a WIFI hotspot.

In a general mode, it is an omnidirectional radiation operation state.

When the terminal has recognized the location of the AP to be currently connected and the intensity is weak and needs to be strengthened, the terminal may switch to the directional radiation mode. The scene of the pattern directional radiation mode is:
The connected AP routers are known or relatively fixed in location.

The terminal is located at the coverage edge of the AP router.

A terminal WIFI displays that the current signal strength is weak.

A terminal WIFI displays that a current uplink and downlink rate is low.

When the foregoing several scenarios or parameter thresholds occur, the WIFI antenna of the device may be switched to the directional radiation working mode, this is implemented by adding switching on the WIFI antenna of the terminal. The radiation location of the pattern can be selected as omnidirectional radiation, bilateral radiation, unilateral radiation, directional radiation at left and right sides, directional radiation at up and down sides, directional radiation at front and back sides, directional radiation in a specific direction.

By means of a SPNT single-pole multi-throw tuning switch, the resonance characteristics of a WIFI signal feed point and a signal feed point are changed, and then corresponding direction diagram is changed. For example, a switch supports antenna parasitics in four states, so that switching of at most four directions can be supported. For example, the switch supports 8 states of antenna parasitics, that is, can support switching of at most 8 patterns. A slot direction diagram changing method includes: a plurality of feed points are set in a slot antenna of an antenna frame, and a direction diagram of a WIFI antenna is changed by adjusting locations of different feed points.

A pattern dynamic tracking module L11,in practical operation, in a communication process of a terminal WIFI and a router, a communication WIFI antenna and a pattern have been determined, i.e. the direction diagram of each antenna WIFI module may radiate a basic model before leaving a factory; and if an environment changes, for example, the direction and location of a terminal change, and a holding posture adjustment, real-time dynamic tracking adjustment of the direction diagram needs to be performed.

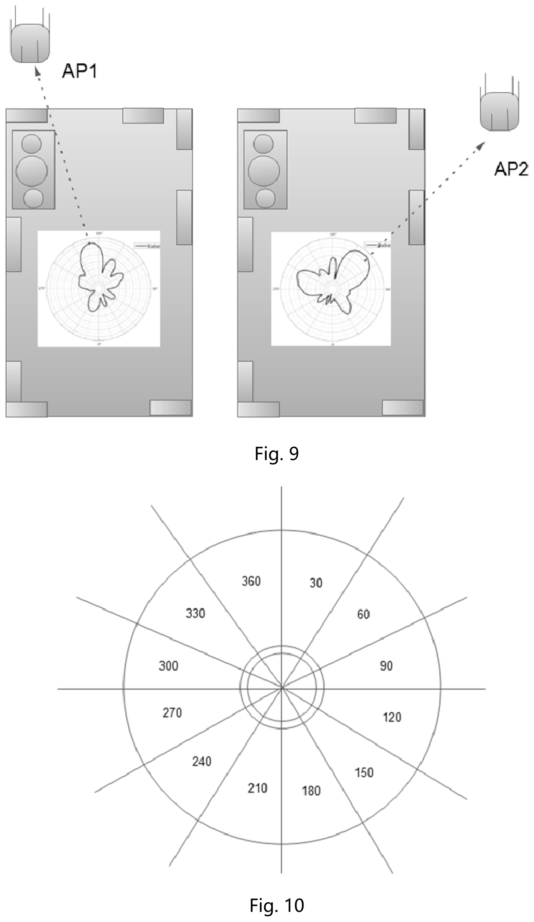

Fig. 9 is a schematic diagram of dynamic tracking of a WIFI terminal direction diagram according to an embodiment of the present invention. As shown in Fig. 9, a dynamic WITI antenna switching module and switching of a WIFI direction diagram may be directly based on throughput switching, may be based on signal strength switching, and may also be based on obstacle detection switching.

When the location and direction of a terminal move during the use of a user, values of the longitude and latitude of a GPS module, an acceleration sensor, a gyroscope and an angular velocity sensor on the terminal change; and when it is detected that these parameters change and a WIFI signal is lower than a threshold value at the same time, a WIFI pattern real-time tracking adjustment is started, combining or recombining the finally decided antenna direction diagram by means of an experimenting and simulation algorithm. If the environment changes, real-time fine adjustment can be performed according to various collected values of the antenna direction diagram, or another antenna direction diagram combination can be re-calculated and selected until an optimal communication state is reached, for example, the peak value of WIFI uploading and downloading throughput is the highest.

When a human body approaches an antenna of a mobile phone or a holding posture changes, an impact is generated on each antenna of the mobile phone. However, because distances are different, an approaching angle and a leaving angle are different, and different types and frequency bands of different antennas themselves are different, a change of a displayed direction diagram is also different. By testing a direction diagram, influences of various parts of a human body on an antenna can be collected, and a preset change is set in a user setting interface or different gestures and angles can be recognized by means of automatic detection, thereby achieving the expression of a human body induction recognition instruction.

Due to the influence of the human body effect, the shape of the direction diagram of the antenna will be changed, the gain will be enhanced in some directions, and the gain will be reduced in other directions. By detecting a direction diagram and a characteristic parameter value in a magnetic induction effect under different distances between a human body and a mobile phone antenna, automatically sensing or setting different human bodies to approach an antenna location, approaching a distance or a combination thereof, and then comparing same with an internally collected antenna direction diagram and parameter model of a terminal, it is judged to recognize different operations and holding postures of the human body.

A WIFI direction diagram library establishment module L12, Fig. 10 is a schematic diagram of a two-dimensional diagram of a WIFI antenna direction diagram according to an embodiment of the present invention. As shown in Fig. 10, establishment of a direction diagram library model is realized by means of software control and hardware adjustment by abstracting a radiation direction of each WIFI antenna of a terminal into a corresponding physical model, and facing a specific application scenario and AP location through a simulation model and measured data.

The establishment of a direction diagram library can also select an optimal direction diagram WIFI antenna and a direction diagram radiation mode according to connection data of a terminal WIFI and specific AP information, so as to form a memory mode, i.e. accumulating and storing the number of connection times by means of direction testing, direction selection and direction adjustment, so as to form a new direction diagram library, so as to establish a stable and high-speed direction diagram channel and avoid a poor signal fading direction in a propagation process.

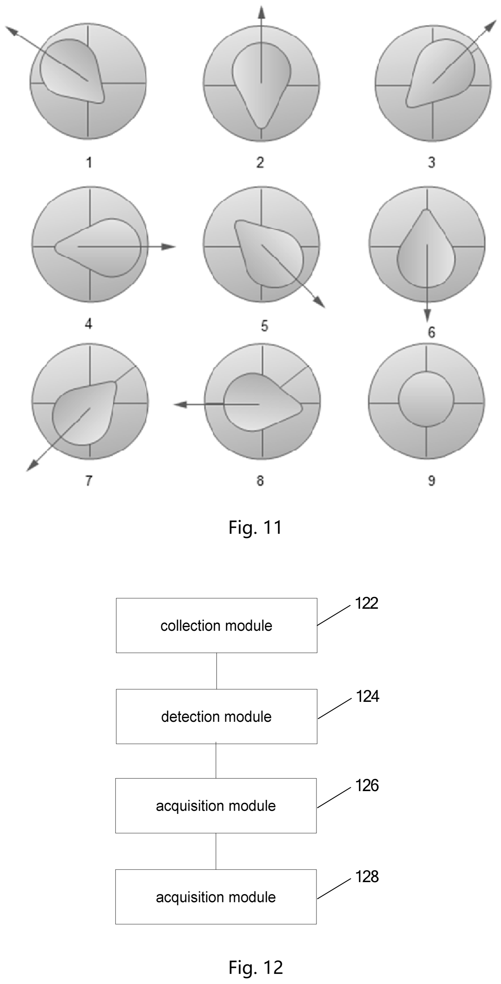

Fig. 11 is a schematic diagram of establishing a direction diagram library of a WIFI antenna according to an embodiment of the present invention. As shown in Fig. 11, a method for establishing a direction diagram model library is as follows: taking a terminal centre as a centre of a circle, establishing a WIFI radiation sector at intervals of 30°C in a 360°C area in a horizontal direction, and establishing 12 directions of a direction diagram altogether. Meanwhile, on a 360°C region in the vertical direction, each interval of 30°C is also used as a WIFI radiation sector, and 12 directions of a pattern are established in total. There are six upper hemispheres and six lower hemispheres, the angle of the WIFI strongest dispersion region in each direction, and the magnitude of the gain being required to reach a pre-set threshold value requirement.

According to another aspect of the embodiments of the present invention, there is further provided a terminal antenna adjustment device. Fig. 12 is a block diagram of a terminal antenna adjustment device according to an embodiments of the present invention. As shown in Fig. 12, the device includes:
a collection module 122, configured to collect a signal quality state of the terminal antenna on each channel path;
a detection module 124, configured to detect an obstacle of the terminal antenna in a transmission direction;
an acquisition module 126, configured to acquire relative location information about the terminal antenna with respect to a router;
an adjustment component 128, configured to adjust radiation of the antenna terminal according to at least one of the signal quality state, the obstacle and the relative location information.

In an embodiment, the adjustment module 128 includes:
a determination sub-module, configured to determine a working antenna of the terminal antenna according to at least one of the signal quality state, the obstacle and the relative location information, wherein the working antenna is a single antenna or an antenna combination;
an adjustment sub-module, configured to adjust the terminal antenna via the working antenna, so that a signal quality state of the terminal antenna satisfies a pre-set condition.

In an embodiment, the determination sub-module is further configured to acquire an omnidirectional direction diagram of the terminal antenna from a pre-established direction diagram library, determine a current direction diagram of the terminal antenna from the omnidirectional direction diagram based on the signal quality state and/or the relative location information, and determine a working antenna of the terminal antenna according to the current direction diagram; or determine an antenna under a transmission channel with maximum signal strength as the working antenna by switching antennas of the terminal antenna under various transmission channels based on at least one of the signal quality state, the obstacle and the relative location information.

In an embodiment, the adjustment sub-module is further configured to:
control the terminal antenna to switch to the working antenna;
when the signal quality state of the terminal antenna satisfies the pre-set condition after switching to the working antenna, adjustment of the terminal antenna ends;
when the signal quality state of the terminal antenna does not satisfy the pre-set condition after switching to the working antenna, perform radiation direction adjustment on the direction diagram of the working antenna according to a parasitic effect and/or a coupling effect of the direction diagram of the working antenna;
when the signal quality state of the terminal antenna satisfies the pre-set condition after the radiation direction adjustment is performed on the direction diagram of the working antenna, adjustment of the terminal antenna ends;and
when the signal quality state of the terminal antenna does not satisfy the pre-set condition after the radiation direction adjustment is performed on the direction diagram of the working antenna, switch the radiation mode of the working antenna, and end the adjustment of the terminal antenna, wherein the radiation mode includes an omnidirectional radiation mode and a directional radiation mode.

In an embodiment, the adjusting submodule is further configured to adjust a radiation direction of the pattern of the working antenna according to a parasitic effect of the pattern of the working antenna, including at least one of:
add a tuning switch or a variable slot length control unit to each antenna to change a direction diagram corresponding to the working antenna;
adjust a direction diagram on a ground feed by using the variable device whose direction diagram is changed;
adjust the radiation direction of the direction diagram through the on/off of the resistance and capacitance tuning part on the path of the feed point of the main signal and the change of the resistance and capacitance value.

In an embodiment, the adjustment sub-module is further configured to form a new direction diagram of the working antenna by changing at least one of power, signal strength and orientation of the direction diagram of the working antenna.

In an embodiment, the adjustment sub-module is further configured to control the radiation mode to be the omnidirectional radiation mode when a location of a router connected to the terminal is unknown or initially connected; and/or when the terminal has identified the location of the router to be connected currently and the signal strength of the router is less than a third preset threshold value, control the radiation mode to be switched to the directional radiation mode.

In an embodiment, the apparatus further includes:
a selection module, configured to select an optimal direction diagram of a terminal antenna and a radiation mode of the direction diagram according to connection data of the terminal antenna and a pre-set router; and/or
a storage module, configured to adjust a direction diagram of the terminal antenna by respectively performing at least one of a direction test, a direction selection and a direction adjustment many times, so as to form an omnidirectional direction diagram of the terminal antenna; and storing the omnidirectional direction diagram into a direction diagram library.

In an embodiment, the collecting module 122 is further configured to collect a signal quality state of the terminal antenna on each channel path in real time in a manner of a baseband chip and an antenna chip connected to the baseband chip, wherein the signal quality state includes at least one of the following: uplink and downlink throughput, an RSSI value, a bit error rate and an SNR signal-to-noise ratio.

In an embodiment, the acquisition module 126 is further configured to collect location information of the terminal at a preset time period, determine a distance difference value between the location information collected at a current time period and location information collected at a previous time period, in a case where the distance difference value is greater than a pre-set distance, determine that a location change occurs to an antenna of the terminal with respect to the router, generate and acquire location change information, wherein the relative location information includes location change information; or acquire a current location of a terminal and an initial location when the terminal is connected to the router, and determine a distance and direction between the current location and the initial location; based on an omnidirectional direction diagram of the terminal antenna, determine and acquire a relative location and a relative direction of the terminal antenna and the router according to the distance and direction, wherein the relative location information includes the relative location and the relative direction.

In an embodiment, the detection module 124 includes:
a first detection sub-module, configured to detect an obstacle of the terminal antenna in a transmission direction in a manner of obstacle proximity detection;
a second detection sub-module, configured to detect the obstacle of the terminal antenna in the transmission direction in a manner of obstacle remotely detection.

In an embodiment, the first detection sub-module is further configured to detect whether an interference or blockage signal source exists in the terminal antenna within a pre-set distance range; when the interference or blockage signal source exists, determine that an obstacle exists in the transmission direction of the terminal antenna; when the interference or blockage signal source does not exist, determine that no obstacle exists in the transmission direction of the terminal antenna; transmit a charge signal to the router, wherein the charge signal is radiated via a corresponding terminal antenna, and return after encountering an obstacle; when the electric charge signal returned by the router is detected, determine that an obstacle exists in the transmission direction in the terminal antenna; and when the electric charge signal returned by the router is not detected, determine that no obstacle exists in the transmission direction in the terminal antenna.

In an embodiment, the second detection sub-module is further configured to determine a time difference between a signal transmitted by the router and a signal returned by the router, and determine that an obstacle exists in a transmission direction of the terminal antenna according to a difference value between the time difference and a predetermined theoretical time difference in a state without obstacles, where the difference value is greater than or equal to a first preset threshold value; in a case where the difference value is less than the first pre-set threshold value, determine that no obstacle exists in a transmission direction in the terminal antenna; determine an attenuation difference between signal strength of a signal sent by the router and a predetermined theoretical signal strength under an obstacle-free state; in a case where the attenuation difference is greater than or equal to a second pre-set threshold value, determine that the terminal antenna has an obstacle in a transmission direction; in a case where the attenuation difference is less than the second pre-set threshold value, determine that no obstacle exists in the transmission direction in the terminal antenna.

Embodiments of the present invention also provide a computer readable storage medium. The computer readable storage medium storing a computer program, wherein the computer program is configured to perform, when executed by a processor, the steps in any one of the described method embodiments.

In an exemplary embodiment, the computer readable storage medium may include, but is not limited to, any medium that can store a computer program, such as a USB flash drive, a read-only memory (Read-Only Memory, ROM for short), a random access memory (Random Access Memory, RAM for short), a removable hard disk, a magnetic disk, or an optical disc.

Embodiments of the present invention further provide an electronic apparatus, including a memory and a processor. The memory stores a computer program. The processor is configured to execute the computer program to perform steps in any one of the method embodiments.

In an exemplary embodiment, the electronic apparatus can further include a transmission device and an input/output device, wherein the transmission device is connected to the processor, and the input/output device is connected to the processor.

For specific examples in this embodiment, reference may be made to the examples described in the foregoing embodiments and exemplary embodiments, and details are not repeatedly described in this embodiment.

Obviously, those skilled in the art should understand that each module or each step of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, Furthermore, in some cases, the shown or described steps may be executed in an order different from that described here, or they are made into integrated circuit modules respectively, or a plurality of modules or steps therein are made into a single integrated circuit module for implementation. As such, the present invention is not limited to any particular hardware and software combination.

The foregoing descriptions are merely exemplary embodiments of the present invention, but are not intended to limit the present invention. For those skilled in the art, the present invention may have various modifications and variations. Any modifications, equivalent replacements, improvements and the like made within the principle of the present invention shall fall within the scope of protection of the present invention.

## Claims

1. A terminal antenna adjustment method, the method comprises:
collecting a signal quality state of a terminal antenna on each channel path;
detecting an obstacle of the terminal antenna in a transmission direction;
acquiring relative location information about the terminal antenna with respect to a router;
adjusting radiation of the antenna terminal according to at least one of the signal quality state, the obstacle and the relative location information.

2. The method according to claim 1, wherein adjusting radiation of the antenna terminal according to at least one of the signal quality state, the obstacle and the relative location information comprises:
determining a working antenna of the terminal antenna according to at least one of the signal quality state, the obstacle and the relative location information, wherein the working antenna is a single antenna or an antenna combination;
adjusting the terminal antenna via the working antenna, so that a signal quality state of the terminal antenna satisfies a pre-set condition.

3. The method according to claim 2, wherein determining the working antenna of the terminal antenna according to at least one of the signal quality state, the obstacle and the relative location information comprises:
acquiring an omnidirectional direction diagram of the terminal antenna from a pre-established direction diagram library, determining a current direction diagram of the terminal antenna from the omnidirectional direction diagram based on the signal quality state and/or the relative location information, and determining a working antenna of the terminal antenna according to the current direction diagram; or
determining an antenna under a transmission channel with maximum signal strength as the working antenna based on at least one of the signal quality state, the obstacle and the relative location information, by switching antennas of the terminal antenna under various transmission channels.

4. The method according to claim 2, wherein adjusting the terminal antenna via the working antenna, so that a signal quality state of the terminal antenna satisfies a pre-set condition comprises:
controlling the terminal antenna to switch to the working antenna;
when the signal quality state of the terminal antenna satisfies the pre-set condition after switching to the working antenna, ending adjustment of the terminal antenna;
when the signal quality state of the terminal antenna does not satisfy the pre-set condition after switching to the working antenna, performing radiation direction adjustment on the direction diagram of the working antenna according to a parasitic effect and/or a coupling effect of the direction diagram of the working antenna;
when the signal quality state of the terminal antenna satisfies the pre-set condition after the radiation direction adjustment is performed on the direction diagram of the working antenna, ending adjustment of the terminal antenna; and
when the signal quality state of the terminal antenna does not satisfy the pre-set condition after the radiation direction adjustment is performed on the direction diagram of the working antenna, switching the radiation mode of the working antenna, and ending the adjustment of the terminal antenna, wherein the radiation mode comprises an omnidirectional radiation mode and a directional radiation mode.

5. The method according to claim 4, wherein performing radiation direction adjustment on the direction diagram of the working antenna according to the parasitic effect of the direction diagram of the working antenna comprises at least one of the following:
adding a tuning switch or a variable slot length control unit to each antenna to change a direction diagram corresponding to the working antenna;
adjusting a direction diagram on a ground feed by using the variable device whose direction diagram is changed;
adjusting the radiation direction of the direction diagram through the on/off of the resistance and capacitance tuning part on the path of the feed point of the main signal and the change of the resistance and capacitance value.

6. The method according to claim 4, wherein performing radiation direction adjustment on the direction diagram of the working antenna according to a coupling effect of the direction diagram of the working antenna comprises:
forming a new direction diagram of the working antenna by varying at least one of power, signal strength, and orientation of the direction diagram of the working antenna.

7. The method of claim 4, wherein switching the radiation mode of the work antenna comprises:
in a case where a location of a router connected to a terminal is unknown or an initial connection is established, controlling the radiation mode to be the omnidirectional radiation mode; and/or
when the terminal has identified the location of the router to be connected currently and the signal strength of the router is smaller than a third preset threshold value, controlling the radiation mode to be switched to the directional radiation mode.

8. The method of claim 3, wherein the method further comprises:
selecting an optimal direction diagram of the terminal antenna and a radiation mode of the direction diagram according to connection data of the terminal antenna and a pre-set router; and/or
adjusting a direction diagram of the terminal antenna by respectively performing at least one of a direction test, a direction selection and a direction adjustment many times, so as to form a omnidirectional direction diagram of the terminal antenna; and storing the omnidirectional direction diagram into a direction diagram library.

9. The method according to any one of claims 1 to 8, wherein collecting a signal quality state of a terminal antenna on each channel path comprises:
collecting a signal quality state of the terminal antenna on each channel path in real time in a manner of a baseband chip and an antenna chip connected to the baseband chip, wherein the signal quality state comprise at least one of the following: uplink and downlink throughput rate, RSSI value, bit error rate and SNR signal-to-noise ratio.

10. The method according to any one of claims 1 to 8, wherein acquiring relative location information about the terminal antenna with respect to the router comprises:
collecting location information of a terminal at a pre-set time period, determining a distance difference value between the location information collected at a current time period and the location information collected at a previous time period, and in a case where the distance difference value is greater than a pre-set distance, determining that a location change occurs to an antenna of the terminal with respect to the router, and generating and acquiring location change information, wherein the relative location information comprises location change information; or
acquiring a current location of a terminal and an initial location when the terminal is connected to the router, and determining a distance and direction between the current location and the initial location; based on an omnidirectional direction diagram of the terminal antenna, determining and acquiring a relative location and a relative direction of the terminal antenna and the router according to the distance and direction, wherein the relative location information comprises the relative location and the relative direction.

11. The method according to any one of claims 1 to 8, wherein detecting an obstruction of the terminal antenna in a transmission direction comprises:
detecting an obstacle of the terminal antenna in a transmission direction in a manner of obstacle proximity detection;
detecting the obstacle of the terminal antenna in the transmission direction in a manner of obstacle remotely detection.

12. The method according to claim 11, wherein detecting an obstacle of the terminal antenna in a transmission direction in a manner of obstacle proximity detection comprises:
detecting whether an interference or blockage signal source exists in the terminal antenna within a pre-set distance range; when the interference or blockage signal source exists, determining that an obstacle exists in a transmission direction of the terminal antenna; and
when the interference or blockage signal source does not exist, determining that no obstacle exists in the transmission direction of the terminal antenna;
transmitting a charge signal to the router, wherein the charge signal is radiated via a corresponding terminal antenna, and returning after encountering an obstacle; when the electric charge signal returned by the router is detected, determining that an obstacle exists in the transmission direction in the terminal antenna; and when the electric charge signal returned by the router is not detected, determining that no obstacle exists in the transmission direction in the terminal antenna.

13. The method according to claim 11, wherein detecting an obstacle of the terminal antenna in the transmission direction in a manner of obstacle remotely detection comprises:
determining a time difference between a signal transmitted to the router and a signal returned by the router; determining that an obstacle exists in a transmission direction on the terminal antenna according to a difference value between the time difference and a pre-determined theoretical time difference in a state without obstacles, where the difference value is greater than or equal to a first pre-set threshold value,; in a case where the difference value is less than the first pre-set threshold value, determining that no obstacle exists in a transmission direction in the terminal antenna;
determining an attenuation difference between signal strength of a signal sent by the router and a predetermined theoretical signal strength under an obstacle-free state; in a case where the attenuation difference is greater than or equal to a second pre-set threshold value, determining that the terminal antenna has an obstacle in a transmission direction; in a case where the attenuation difference is less than the second pre-set threshold value, determining that no obstacle exists in the transmission direction in the terminal antenna.

14. A terminal antenna adjustment device, the device comprises:
a collection module, configured to collect a signal quality state of a terminal antenna on each channel path;
a detection module, configured to detect an obstacle of the terminal antenna in a transmission direction;
an acquisition module, configured to acquire relative location information about the terminal antenna with respect to a router;
an adjustment module, configured to adjust radiation of the antenna terminal according to at least one of the signal quality state, the obstacle and the relative location information.

15. A computer readable storage medium, the storage medium storing a computer program, wherein the computer program is configured to perform, when executed by a processor, the method as claimed in any one of claims 1 to 13 when running.

16. An electronic device, comprising a memory and a processor, wherein the memory stores a computer program, and the processor is configured to execute the computer program to perform the method as claimed in any one of claims 1 to 13.
